# EUROPEAN PATENT APPLICATION

(11) **EP 1 890 060 A1**
(43) Date of publication of application: **20.02.2008**
(21) Application number: 07114379.6
(22) Date of filing: 15.08.2007
(51) Int. Cl.: F16J 15/44

(54) **A variable clearance packing ring**

(30) Priority: 17.08.2006 US 465254
(71) Applicant: General Electric Company, Schenectady, NY 12345 (US)
(72) Inventor: Chevrette, Richard Jon, Troy NY 12180 (US)
(74) Representative: Illingworth-Law, William Illingworth

(57) **Abstract**

Disclosed is a packing ring segment (10) for providing a seal between a stationary component (14) and a turbine shaft (16) of a rotary machine, including an actuating arrangement (32) disposed within the packing ring segment (10), and a resilient beam-type element (34) included in the actuating arrangement (32), the resilient beam-type element (34) radially outwardly biasing the packing ring segment (10) away from the turbine shaft (16).

## Description

### FIELD OF THE INVENTION

This application relates generally to steam turbines, and more specifically, to seals between rotating and stationary components of a steam turbine.

### BACKGROUND OF THE INVENTION

In rotary machines such as turbines, seals are provided between rotating and stationary components. For example, in steam turbines it is customary to provide a plurality of arcuate packing ring segments (sometimes referred to as seal ring segments) bearing labyrinthian sealing features to form a seal between the stationary and rotating components of the rotating machine. Generally, the arcuate packing ring segments are disposed in an annular groove in the stationary component concentric to the axis of rotation of the machine and hence concentric to the sealing surface of the rotating component. Each arcuate seal segment carries an arcuate seal face in opposition to the sealing surface of the rotating component. In labyrinth type seals, the seal faces carry a radially directed array of axially spaced teeth, which are closely radially spaced from an array of axially spaced annular teeth forming the sealing surface of the rotating component. The sealing function is achieved by creating turbulent flow of a working media, for example, steam, as it passes through the relatively tight clearances within the labyrinth defined by the seal face teeth and the opposing surface of the rotating component.

The ability to maintain proper clearances without physical contact between the rotating equipment and stationary components allows for the formation of an effective seal. If this radial clearance between the seal faces of the segments and the opposing seal surfaces of the rotating component becomes too large, the flow area increases, less turbulence is produced and the sealing action is compromised. Conversely, if the clearance is too tight, the sealing teeth may contact the rotating element, with the result that the teeth lose their sharp profile and tight clearance and thereafter create less turbulence, and possesses an increased flow area, likewise compromising the sealing action.

In order to avoid damage to the rotor and packing ring segment during transient conditions such as startup and shutdown, positive pressure, variable clearance packing rings are sometimes used. In positive pressure, variable clearance packing rings, the packing ring segments are commonly spring biased into outer or large clearance positions causing the seal faces carried by the packing ring to be spaced substantially outwardly of the rotary component. After start-up, the working fluid medium, e.g., steam, enters the grooves of the stationary component, urging the segments to move inwardly against the bias of the springs, toward the inner or small clearance positions. These springs are located within the annular groove defined by the stationary component, and are sized relative to the annular grooves in which they reside. In large turbine units, the annular groove is typically large enough to accommodate large springs having elasticity capable of tolerating the pressure-force resulting from inlet of the fluid medium. In addition, the packing ring is typically large enough to allow springs to be affixed to the portion of the packing ring residing in the annular groove.

However, when working with smaller turbine units used in applications such as boiler feed pumps, reactor feed pumps, mechanical drives for compressors and pumps, and some generator drive units, it can become difficult and impractical to install capable springs within the narrow width/diameter annular grooves present in the smaller turbine unit. Thus, in these instances, there is a need for a variable clearance packing ring assembly that can be used in conjunction with annular grooves having too small a width and diameter to accommodate conventional springs.

### BRIEF DESCRIPTION OF THE INVENTION

Disclosed is a packing ring segment for providing a seal between a stationary component and a turbine shaft of a rotary machine, including an actuating arrangement disposed within the packing ring segment, and a resilient beam-type element included in the actuating arrangement, the resilient beam-type element radially outwardly biasing the packing ring segment away from the turbine shaft.

Also disclosed is a method for providing a seal between a stationary component and a turbine shaft of a rotary machine, the method including internally biasing a packing ring segment into a clearance position via an internal, resilient beam-type element internal to the packing ring, directing a fluid pressure to a radially outwardly disposed surface of the packing ring segment, the pressure opposing a force exerted by the resilient beam-type element on the packing ring segment, and relocating the packing ring segment to a sealing position via the pressure from the fluid medium.

### BRIEF DESCRIPTION OF THE DRAWINGS

Embodiments of the present invention will now be described, by way of example only, referring to the drawings wherein like elements are numbered alike in the several Figures:
Figure 1 is a section view of a portion of an exemplary steam turbine;
Figure 2 is an enlarged view of a circumscribed portion of Figure 1 labeled 2-2;
Figure 3 is a cross-section view of the exemplary variable clearance packing ring segment of Figure 2 taken along section line 3-3;
Figure 4 is the view of the circumscribed portion illustrated in Figure 2, but in a sealing position;
Figure 5 is a top plan view of the circumscribed portion of Figure 2 along section line 5-5; and
Figure 6 is a block diagram illustrating a method for providing a seal between a stationary component and a turbine shaft of a rotary machine.

### DETAILED DESCRIPTION OF THE INVENTION

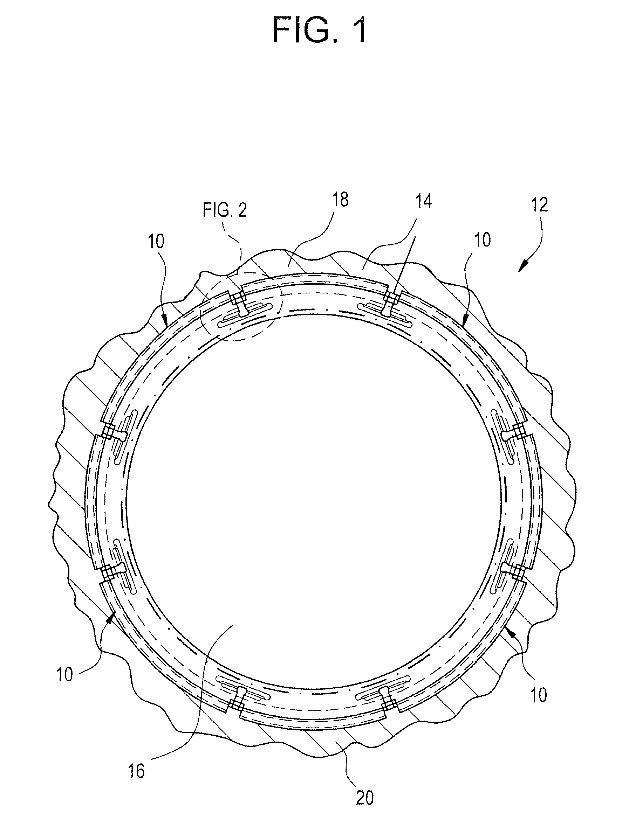

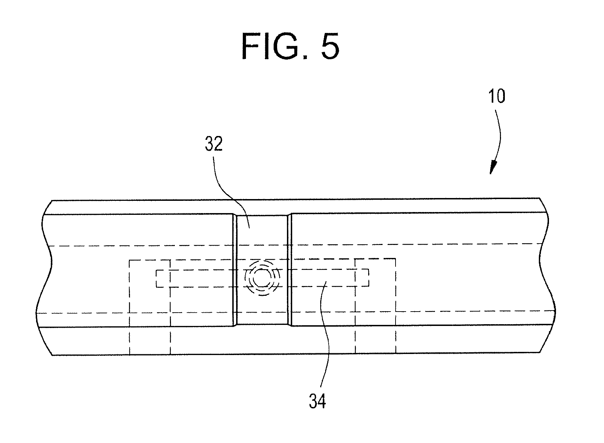

Referring to Figures 1-5, a variable clearance packing ring segment 10 is illustrated. For clarity purposes, Figure 1 illustrates a section 11 of a rotary machine that includes a plurality of packing ring segments 10, illustrated, by way of example, as four packing ring segments 10. The packing ring segments 10 an annular ring arrangement 12, and each function to form a seal between a stationary component 14 and a turbine shaft 16 of the rotary machine. As illustrated in Figure 1, the stationary component may be a diaphragm including a first half 18 and a second half 20. The packing segments 10 are movable between an outermost large clearance, or open position 21, and an innermost small clearance, or sealing position 23, with each position being discussed in greater detail later in the disclosure.

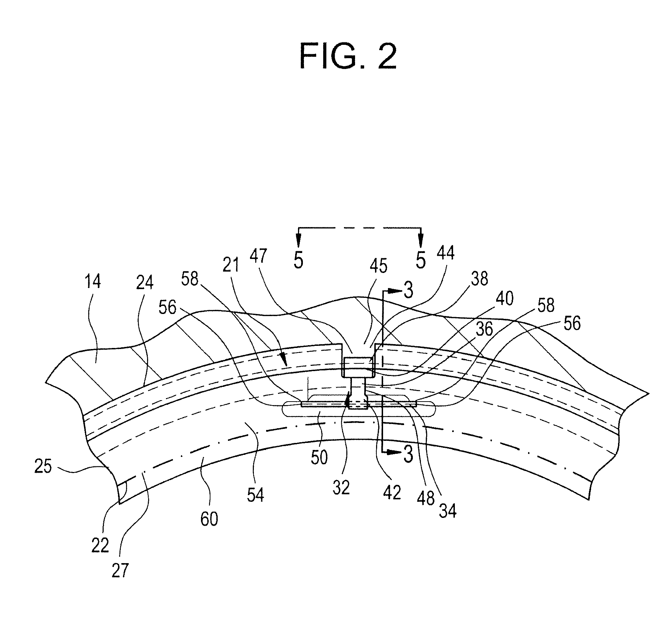

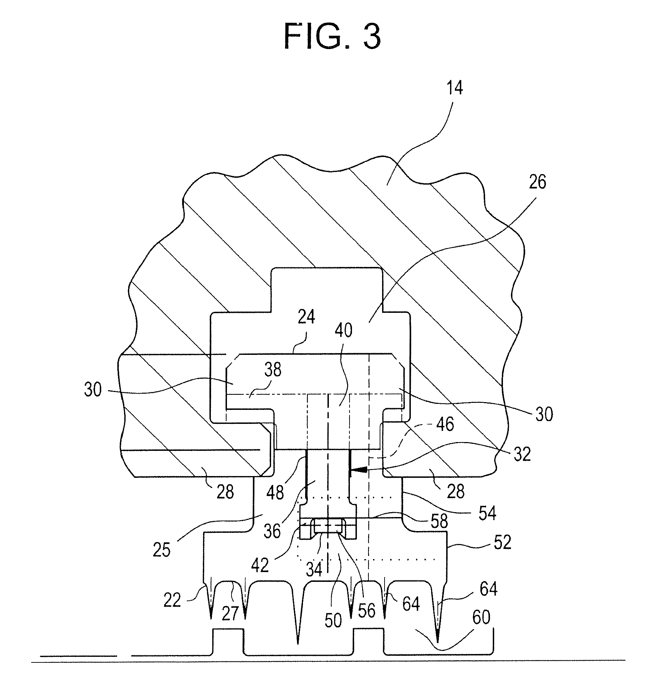

Each ring segment 10 (a portion of which shown in detail in Figures 2-4) includes a radially inwardly disposed surface 22 associated with a radially outwardly disposed surface 24 via an intermediate portion 25, the inwardly disposed surface 22 functioning as a sealing face 27 of the segment 10. The radially outwardly disposed surface 24 is disposed within an annular groove 26 defined by the stationary component 14. As is shown best in Figure 3, the stationary component includes at least one casing flange 28, and the segment 10 includes at least one segment flange 30.

Included internally to the segment 10 is at least one actuating arrangement 32, with an exemplary embodiment including two arrangements 32. The actuating arrangement 32 includes a resilient beam-type element 34, a connecting component 36, and an impeding component 38. These three components reside within the segment 10, and provide a means for segment movement/biasing between the clearance position 21 and the sealing position 23.

The actuating arrangement 32 is formed or manufactured such that the connecting component 36 securely associates the resilient beam-type element 34 with the impeding component 38. The connecting component 36 includes an impeding end 40, at which the connecting component 36 and impeding component 38 are securely associated to form a rigid "T" structure. The connecting component 36 comprises the vertical portion of the "T", while the impeding component 38 comprises the horizontal portion of the "T", as shown in Figure 3, wherein the impeding structure 38 lies consistently adjacent to the at least one flange 28 included in the stationary component 14.

At an opposite end to its connection with the impeding component 38, the connecting component 36 is also securely associated with the resilient beam-type element 34, which is disposed substantially orthogonal to the connecting component 36. This end is referred to as an actuator end 42 of the connecting component 36, and it is securely attached to the resilient beam-type element 34 via any means necessary, such as fastening, welding, or threaded connection.

The ring segment 10 defines a segment cavity 44 that allows the actuating arrangement 32 to be disposed internally of the segment 10. The segment cavity 44 opens from an outwardly disposed surface opening 45 defined by the outwardly disposed surface 24 of the segment 10, and extends a partial length 46 of the segment 10 towards the inwardly disposed surface 22. The segment cavity 44 includes a radially outwardly disposed region 47, an intermediate region 48, and a radially inwardly disposed region 50 that is disposed substantially orthogonally to the radially outwardly disposed region 47 and intermediate region 48. The radially inwardly disposed region 50 of the cavity 44 opens at an intermediate opening 52 defined by the intermediate portion 25 of the segment 10, the intermediate opening being disposed on a relative side 54 of the segment 10. In an exemplary embodiment, the arrangement 32 may be inserted right-to-left into the segment cavity 44 as viewed in Figure 3, with the impeding end 40 inserted into the radially outwardly disposed region 47, the connecting component 36 inserted into the intermediate region 48, and the resilient beam-type element 34 inserted into the radially inwardly disposed region 50.

Within the segment cavity 44, the resilient beam-type element 34 engages the segment 10 in which it resides. In an exemplary embodiment, the resilient beam-type element 34 includes contact ends 56 that contact the segment 10 at inner cavity ridges 58 within the inwardly disposed region 50 of the segment cavity 44.

The resilient beam-type element 34 may be any elongated biasing component capable of exerting force, such as a leaf spring, a flat spring, or any flat material having a beam shape. The resilient beam-type element 34 exerts a radially outward force on the segment 10 away from the turbine shaft 16, and exerts a radially inward force on the "T" structure (impeding component 38 and connecting component structure 36) towards the turbine shaft 16. Since, however, the impeding component 38 of the "T" structure is disposed consistently adjacent to the at least one flange 28 of the stationary component 14, the "T" structure as a whole does not move towards the turbine shaft. The "T" structure instead acts as an anchor to the stationary component 14 that allows the radially outward force exerted by the resilient beam-type element 34 on the segment 10 to bias the segment 10 into the open position 21, (as shown in Figures 2 and 3), which will be discussed in greater detail hereinbelow.

Referring to Figures 2 and 3, the segment 10 is illustrated in the open position 21, which allows a large clearance gap 60 between the turbine shaft 16 and sealing face 27 of the segment when the rotary machine is in a transient condition, such as start up and shut down. The open or clearance position 21 is achieved via the resilient beam-type element 34, which urges the segment 10 into the clearance position 21 via the radial force applied to the inner cavity ridges 58 of the segment 10. As mentioned above this outwardly radial force biases the segment away from the turbine shaft 16, and holds the segment 10 in the clearance position 21 for the duration of any transient condition within the rotary machine. Throughout biasing of the segment 10 into the clearance position 21 via the beam-type element 34, and holding of the segment 10 in the clearance position 21 via the beam-type element, the "T" structure remains substantially stationary and adjacent to flanges 28.

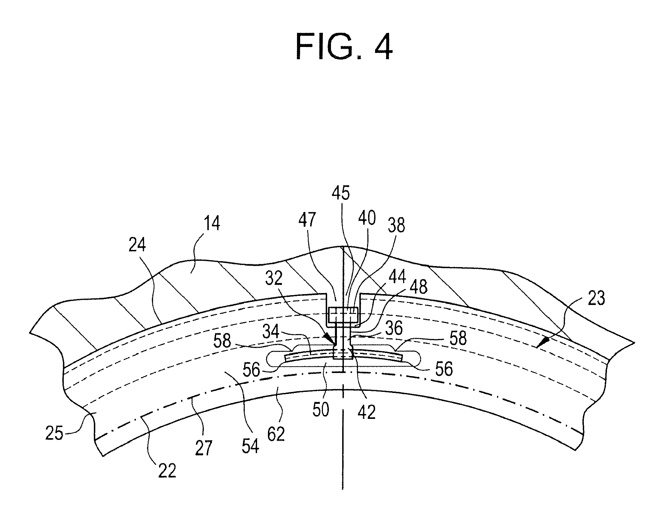

Referring also to Figure 4, the packing ring 104 moves from the clearance position 21 to the sealing position 23, wherein the sealing position 23 allows a small clearance gap 62 between the turbine shaft 16 and the sealing face 27 of the segment 10. The segment 10 is moved into the sealing position 23 when, during operation of the turbine shaft 16, a fluid medium such as steam is inlet into the annular groove 26 of the stationary component 14 via plurality of passages (not shown). Fluid medium inlet into the annular groove 26 builds a pressure upon the outwardly disposed surface 24 of the segment 10, and this pressure inwardly biases the segment against the bias of the beam-type element 34. The beam-type element 34 is configured to have a strength that will be overcome by this pressure bias, and thus, the segment 10 moves towards the turbine shaft 16, reducing the large clearance gap 60 until a seal with the turbine shaft 16 is ultimately formed via plurality of radially projecting teeth 64. This movement may bend the beam-type element 34, as shown in Figure 4.

It should be appreciated that the segment 10 (or a plurality of segments 10) may be configured for use in any type of arrangement of rotating and stationary components, such as, but not limited to, a steam turbine, gas turbine, generator or compressor.

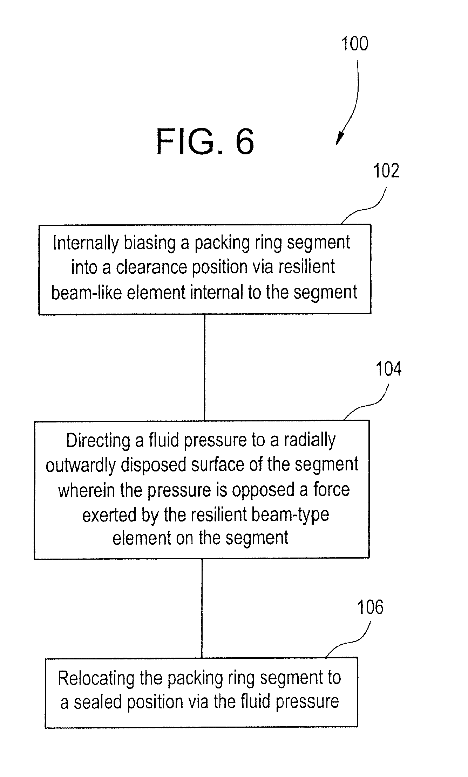

Referring to Figure 6, a method 100 for providing a seal between a stationary component 14 and a turbine shaft 16 of a rotary machine is illustrated and includes internally biasing a packing ring segment 10 into a clearance position 21 via resilient beam-like element 34 internal to the segment 10, as shown in Operational Block 102. The method 100 also includes directing a fluid pressure to a radially outwardly disposed surface 24 of the segment 10, wherein the pressure is opposed a force exerted by the resilient beam-type element 34 on the segment 10, as shown in Operational Block 104, and relocating the packing ring segment 10 to a sealing position 23 via the fluid pressure, as shown in Operational Block 106.

It should be appreciated that the method 100 may also include the resilient beam-type element 34 holding the packing ring segment 10 in the clearance position 21 during transient conditions of the rotary machine. The packing ring segment 10 may additionally be relocated to the sealing position 23 during operating conditions of the rotary machine.

While the invention has been described with reference to an exemplary embodiment, it should be understood by those skilled in the art that various changes may be made and equivalents may be substituted for elements thereof without departing from the scope of the invention. In addition, many modifications may be made to adapt a particular situation or substance to the teachings of the invention without departing from the scope thereof. Therefore, it is important that the invention not be limited to the particular embodiment disclosed as the best mode contemplated for carrying out this invention, but that the invention will include all embodiments falling within the scope of the apportioned claims. Moreover, unless specifically stated any use of the terms first, second, etc. do not denote any order or importance, but rather the terms first, second, etc. are used to distinguish one element from another.

## Claims

1. A packing ring segment (10) for providing a seal between a stationary component (14) and a turbine shaft (16) of a rotary machine comprising:
an actuating arrangement (32) disposed within the packing ring segment (10); and
a resilient beam-type element (34) included in said actuating arrangement (32), said resilient beam-type element (34) radially outwardly biasing the packing ring segment (10) away from the turbine shaft (16).

2. The packing ring segment (10) of claim 1, further comprising a ring cavity defined the packing ring segment (10).

3. The packing ring segment (10) of claim 2, wherein said ring cavity includes a radially inwardly disposed region (50), an intermediate region (48), and a radially outwardly disposed region (47).

4. The packing ring segment (10) of claim 1, wherein said actuating arrangement (32) is an impeding portion associated with said resilient beam-type element (34) via a connecting portion.

5. The packing ring segment (10) of claim 2, wherein said actuating arrangement (32) is disposed within said ring cavity.

6. The packing ring segment (10) of claim 1, wherein said resilient beam-type element (34) is a leaf spring.

7. The packing ring segment (10) of claim 1, wherein said resilient beam-type element (34) is a flat spring.

8. The packing ring assembly of claim 1 wherein a radially inwardly disposed surface (22) of the packing ring segment (10) is a sealing face (27) of the packing ring segment (10).

9. The packing ring segment (10) of claim 8 wherein said sealing face (27) further comprises a plurality of radially projecting teeth (64).

10. The packing ring segment (10) of claim 3, wherein said segment cavity (44) includes an outwardly disposed surface opening defined by a radially outwardly disposed surface (24) of the packing ring segment (10), and extends a partial length of the packing ring segment (10) towards a radially inwardly disposed surface (50) of the packing ring segment (10).
